# DEMANDE DE BREVET EUROPEEN

(11) **EP 0 525 635 A1**
(43) Date de publication de la demande: **03.02.1993**
(21) Numéro de dépôt: 92112575.3
(22) Date de dépôt: 23.07.1992
(51) Int. Cl.: H01H 33/66

(54) **Ampoule sous vide pourvue d'une isolation électrique**

(30) Priorité: 26.07.1991 FR 9109508
(71) Demandeur: GEC ALSTHOM SA, F-75116 Paris (FR)
(72) Inventeur: Rouch, Robert, F-65350 Pouyastruc (FR); Descazeaux, Michel, F-65430 Soues (FR)
(74) Mandataire: Weinmiller, Jürgen

(57) **Abrégé**

L'invention concerne une ampoule sous vide isolée pour la coupure d'un circuit électrique, l'ampoule comprenant deux pôles électriques permettant d'assurer la liaison électrique entre l'extérieur et des contacts de coupure placés à l'intérieur de l'ampoule, le corps de l'ampoule étant renforcé diélectriquement par un isolateur extérieur disposé sur l'ampoule entre les deux pôles électriques, caractérisé en ce que l'isolateur (15) est constitué d'une gaine de polymère thermorétractée directement sur le corps de l'ampoule.

## Description

La présente invention concerne une ampoule sous vide pourvue d'une isolation électrique, en particulier pour une utilisation en atmosphère polluée propre à certaines industries ou en atmosphère extérieure comme par exemple dans le domaine ferroviaire.

Les ampoules sous vide sont utilisés dans des dispositifs de coupure de courant. Une ampoule sous vide est constituée par un cyclindre en matériau isolant équipé de deux contacts électriques en vis-à-vis. L'un de ces contacts est fixe et l'autre est mobile pour permettre la séparation ou la réunion des contacts. Les contacts sont reliés à des brides conductrices extérieures placées sur des faces opposées de l'ampoule, ces brides permettant les liaisons électriques avec les lignes ou circuits extérieurs.

Le vide fait à l'intérieur de l'ampoule assure dans un volume réduit la tenue diélectrique et le pouvoir de coupure. Cependant, il faut assurer aux lignes de fuite extérieures à l'ampoule une longueur suffisante pour garantir l'isolement global entre contacts. On équipe alors les ampoules d'isolateurs électriques munis d'ailettes pour obtenir des lignes de fuite de longueur suffisante.

Les isolateurs sont classiquement en céramique. Un isolateur se place autour d'une ampoule sous vide et entre les brides. L'espace compris entre l'ampoule et l'isolateur est comblé par une résine de remplissage qui doit posséder de très bonnes qualités d'adhérence et être sans retrait pour éviter la formation d'une couche d'air entre l'ampoule et la résine d'une part, la résine et l'isolateur céramique d'autre part.

Les isolateurs en céramique présentent un certain nombre d'inconvénients. Ils sont lourds et surtout cassants, ce qui les rend particulièrement sensibles au vandalisme. Lorsqu'ils sont disposés sur le toit de véhicules ferroviaires, leur volume relativement important constitue une résistance à l'avancement.

En remplacement de la céramique, il est connu de surmouler une résine en forme d'isolateur sur une ampoule sous vide. Il s'agit de résines époxydes, par exemple celles connues sous le nom déposé d'Araldite, traitées pour résister aux rayons ultraviolets. Cependant, ces matériaux sont également cassants et leur mise en oeuvre implique des épaisseurs importantes donc un poids élevé.

On connaît par ailleurs, par le document WO 91/06106, déposé par la société RAYCHEM LIMI-TED, un isolateur haute tension ayant un noyau de polymère qui lui assure une bonne résistance mécanique et protégé à l'extérieur par une gaine de polymère thermorétractable, électriquement isolante et résistante aux courants de fuite, cette gaine étant munie d'ailettes à sa surface externe.

Pour pallier aux inconvénients des ampoules à vide pourvue d'une isolation électrique selon l'art connu, on propose selon la présente invention de greffer directement sur une ampoule à vide, des produits isolants électriquement et thermorétracta- bles tels que ceux divulgués dans WO 91/06106. Ces produits procurent une très bonne résistance aux chocs grâce à leur souplesse et permettant d'obtenir des isolateurs légers et peu encombrants.

L'invention a donc pour objet une ampoule sous vide isolée pour la coupure d'un circuit électrique, l'ampoule comprenant deux pôles électriques permettant d'assurer la liaison électrique entre l'extérieur et des contacts de coupure placés à l'intérieur de l'ampoule, le corps de l'ampoule étant renforcé diélectriquement par un isolateur extérieur disposé sur l'ampoule entre les deux pôles électriques, caractérisé en ce que l'isolateur est constitué d'une gaine de polymère thermorétractée directement sur le corps de l'ampoule .

La gaine comportera avantageusement des ailettes sur sa surface externe. Elle peut être constituée de plusieurs tronçons.

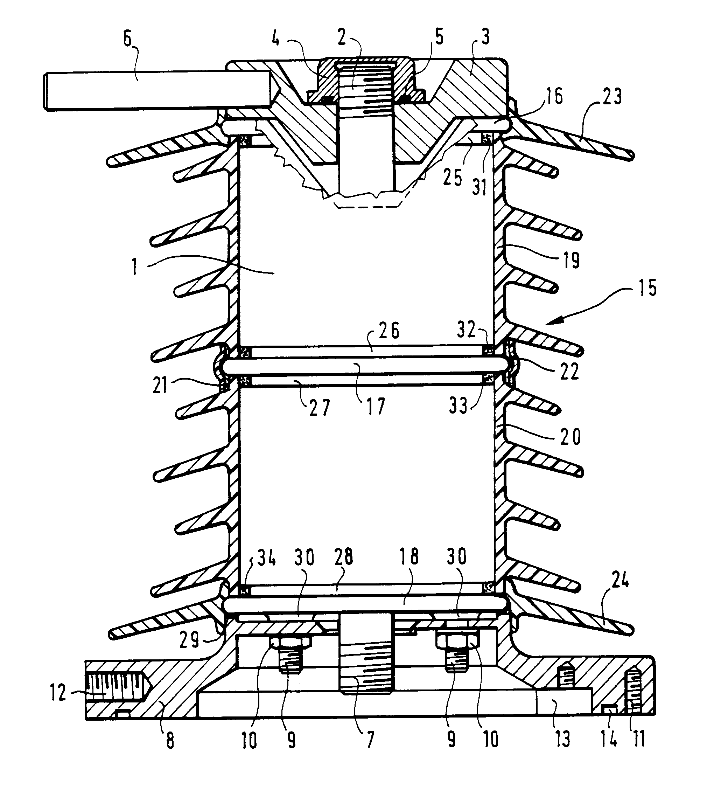

L'invention sera mieux comprise et d'autres avantages et particularités apparaîtront à la lecture de la description qui va suivre, donnée à titre non limitatif, accompagnée de la figure annexée qui représente une ampoule sous vide pourvue de son isolation électrique selon l'invention.

La figure annexée est une vue en coupe selon l'axe de symétrie du dispositif, à l'exception de l'ampoule sous vide 1 en matériau isolant tel que la porcelaine ou la céramique et qui n'est que partiellement représentée en coupe.

L'ampoule comprend une tige filetée supérieure 2 qui se termine à l'intérieur de l'ampoule par un contact fixe. La tige supérieure 2, fixe par rapport à l'ampoule, passe au travers de la bride supérieure 3 et maintient cette bride solidement sur la face supérieure de l'ampoule grâce à un bouchon écrou 4. La bride supérieure est métallique, par exemple en cuivre ou en aluminium. Le bouchon écrou peut être en cuivre. Un joint torique 5 complète l'assemblage qui est ainsi rendu étanche à l'eau et aux autres fluides polluants. La bride supérieure 3 est destinée A recevoir une tige méal- lique 6 qui est brasée dans la bride et qui assure la liaison électrique avec l'extérieur, par exemple vers un pantographe dans le cas d'une application ferroviaire.

Une tige filetée inférieure 7 sort de la face inférieure de l'ampoule sous vide. Elle se termine, côté interne de l'ampoule, par un contact mobile situé en vis-à-vis du contact fixe solidaire de la tige supérieure 2. Un système à soufflet métallique lié à la tige 7 assure l'étanchéité de l'intérieur de l'ampoule tout en permettant un déplacement axial à la tige 7. Ce déplacement sera commandé par exemple par un piston. La tige 7 passe au travers d'une bride inférieure métallique 8 fixée à la face inférieure de l'ampoule sous vide grâce à trois tiges filetées 9, solidaires de la face inférieure et disposées à 120° l'une par rapport à l'autre, et grâce à trois écrous 10 vissés sur les tiges filetées 9.

La bride inférieure 8 se fixe sur un bâti, par exemple par l'intermédiaire d'un autre isolateur, par des vis s'engageant dans les trous filetés 11. La référence 12 désigne un trou fileté pour la fixation de la connexion électrique inférieure. La liaison électrique entre la bride inférieure 8 et la tige 7 se fait par trois tresses conductrices reliées électriquement d'une part à la bride inférieure et d'autres part à un plateau conducteur connecté électriquement et mécaniquement à la tige inférieure. Le trou 13, en partie fileté, constitue l'un des points de fixation des tresses conductrices sur la bride inférieure. La bride inférieure comporte encore, sur sa face opposée à l'ampoule, une gorge annulaire 14 pour loger un joint torique d'étanchéité.

Entre les brides inférieure et supérieure, la référence générale 15 désigne l'isolateur électrique. Pour des raisons pratiques il est formé de plusieurs parties. L'ampoule sous vide comprenant une collerette supérieure 16, une collerette médiane 17 et une collerette inférieure 18, l'isolateur comprend une première gaine ailettée 19 entre les collerettes supérieure et médiane et une deuxième gaine ailettée 20 entre les collerette médiane et inférieure. Pour assurer la continuité de l'isolateur, on dispose en superposition sur la collerette médiane deux petites gaines 21 et 22. On peut également rapporter sur les collerettes d'extrémité des ailettes 23 et 24 pour augmenter la longueur de la ligne de fuite.

Si, comme c'est le cas sur la figure annexée, la surface de l'ampoule est pourvue de gorges ou de creux, on cherchera à combler ces gorges ou ces creux par un matériau de même nature que l'isolateur, ou de propriétés isolantes équivalentes, de manière à avoir une structure la plus uniforme possible. Ainsi les gorges 25, 26, 27 et 28 adjacentes aux collerettes 16, 17 et 28 peuvent être comblées par un mastic mis en place par enrubannage et représenté sur la figure sous les références 31, 32, 33 et 34.

La mise en place de l'isolateur électrique 15 se fait de la façon suivante. Après avoir bouché toutes les gorges et rainures sur la face cylindrique de l'ampoule, on enfile sur l'ampoule prise isolément, les gaines ailettées 19 et 20 et les petites gaines 21 et 22.

Ces gaines sont donc en un matériau thermorétractable du type décrit dans le document WO 91/06106. Le diamètre intérieur des gaines 19 et 20 est légèrement supérieur au diamètre hors tout de l'ampoule et les diamètres intérieurs des petites gaines 21 et 22 sont choisis en conséquence.

Il est inutile d'insérer une quelconque matière entre l'ampoule et les gaines hormis le matériau nécessaire pour combler les gorges ou interstices. Par chauffage on rétracte les gaines par exemple grâce à une soufflette à air chaud ou grâce à un four sous vide. On peut ainsi préchauffer les gaines montées sur l'ampoule dans un four normal à 800 C puis transférer rapidement l'ensemble dans un four sous vide déjà porté à une température comprise entre 225 et 235 ° C. On fait le vide (au moins 50 millibars) en moins d'une minute pour évacuer l'air compris entre gaines et ampoule. On effectue ensuite une cuisson à la température indiquée pendant environ 20 mn pour obtenir la rétraction des gaines.

Il est préférable de placer deux gaines 21 et 22 plutôt qu'une seule de manière à augmenter la tenue mécanique contre les déchirures.

On installe ensuite l'ailette supérieure 24 puis la bride supérieure 3 que l'on fixe sur l'ampoule par vissage de l'écrou 4.

On rétreint ensuite cette ailette. On place ensuite l'ailette inférieure sur la bride inférieure. On dispose une couronne 29 de résine époxyde sur la face supérieure de la bride inférieure 8 et on place l'ampoule sous vide sur la bride. La résine 29, qui polymérise à température ambiante, comble l'espace existant entre la bride inférieure et l'ampoule qui repose sur cette bride grâce aux épaulements 30. L'ailette 24 est placée à la hauteur voulue et est retreinte.

Il est préférable, à cause des températures utilisées de monter le joint torique 5 après avoir effectué les opérations de rétreint.

## Revendications

1. Ampoule sous vide isolée pour la coupure d'un circuit électrique, l'ampoule comprenant deux pôles électriques permettant d'assurer la liaison électrique entre l'extérieur et des contacts de coupure placés à l'intérieur de l'ampoule, le corps de l'ampoule étant renforcé diélectriquement par un isolateur extérieur disposé sur l'ampoule entre les deux pôles électriques, caractérisé en ce que l'isolateur (15) est constitué d'une gaine de polymère thermorétractée directement sur le corps de l'ampoule .

2. Ampoule sous vide isolée selon la revendication 1, caractérisé en ce que la gaine comporte des ailettes sur sa surface externe.

3. Ampoule sous vide isolée selon l'une des revendications 1 ou 2, caractérisé en ce que la gaine comprend plusieurs tronçons (19, 20, 21, 22, 23, 24).

4. Ampoule sous vide isolée selon l'une quelconque des revendications 1 à 3, caractérisée en ce qu'un matériau isolant électriquement est disposé dans les éventuels évidements (25, 26, 27, 28) existant sur la surface de l'ampoule destinée à être mise en contact avec la gaine.
